# EUROPEAN PATENT SPECIFICATION

(11) **EP 3 916 719 B1**
(45) Date of publication and mention of the grant of the patent: **09.08.2023**
(21) Application number: 20214645.2
(22) Date of filing: 16.12.2020
(51) Int. Cl.: G10L 15/20, G10L 21/0208, H04R 3/00, G10L 21/0216, G10L 25/78, G10L 15/08, G06F 3/16, B60R 16/037

(54) **SPEECH RECOGNITION**
SPRACHERKENNUNG
RECONNAISSANCE VOCALE

(30) Priority: 29.05.2020 CN 202010476393
(43) Date of publication of application: 01.12.2021
(73) Proprietor: Apollo Intelligent Connectivity (Beijing) Technology Co., Ltd., Beijing 100176 (CN)
(72) Inventor: YANG, Danqing, Beijing 100085 (CN); SONG, Zhengbin, Beijing 100085 (CN); XU, Gang, Beijing 100085 (CN)
(74) Representative: Studio Torta S.p.A.

(56) References cited:
- WO-A1-2017/138934
- US-A1- 2008 232 607
- US-A1- 2016 372 134
- US-A1- 2017 053 667
- US-A1- 2019 349 678

## Description

### TECHNICAL FIELD

The present disclosure relates to a field of audio signal processing technologies, and more particularly, to a field of artificial intelligence speech recognition technologies.

### BACKGROUND

With development of artificial intelligence technologies, human-computer interaction modes have been improved. Human-computer interaction based on speech has been popularized. In order to achieve good interaction effects, cooperation of speech collection, speech recognition and result response is required, and accuracy of speech recognition is a key factor.

Currently, complexity of speech recognition scenes is getting increasingly higher. For example, in a scene where people speak at the same time, a speech recognition engine needs to receive and recognize speeches of different people at the same time, which may lead to incorrect recognition of user intentions.

Therefore, in the related art, speech recognition is required to be more accurate in complex sound production scenes.

Document US 2019349678 A1 discloses a beamforming audio capture apparatus. Document US 2016372134 A1 discloses a speech recognition apparatus and a speech recognition method. Document WO 2017138934 A1 discloses techniques for spatially selective wake-up word recognition and related systems and methods. Document US 2017053667A1 discloses methods and apparatus for broadened beamwidth beamforming and postfiltering. Document US 2008232607A1 discloses robust adaptive beamforming with enhanced noise suppression.

### SUMMARY

Embodiments of the present disclosure provide a speech recognition method, a speech recognition apparatus, and a medium, in order to be able to perform speech recognition more accurately in complex sound production scenes.

The invention is defined by the appended independent claims. The dependent claims provide further preferred embodiments of the invention.

In the embodiments, the audio signals collected by the microphones in the at least two sound zones are obtained. It is determined whether each audio signal includes the key speech according to the sound energy of the audio signal to acquire the determined result. The step size of the adaptive filter in each sound zone is adjusted according to the determined result. The adaptive filter is controlled to perform the adaptive filtering processing on the audio signal collected in the sound zone corresponding to the adaptive filter according to the adaptive adjustment parameter, and the filtered signal is output. The speech recognition is performed on the filtered signal. This solution improves accuracy and comprehensiveness of speech recognition in the complex sound production scenes.

It should be understood that the content described in this section is not intended to identify key or important features of the embodiments of the present disclosure, nor is it intended to limit the scope of the present invention, which is defined solely by the appended claims. Additional features of the present disclosure will be easily understood by the following description.

### BRIEF DESCRIPTION OF THE DRAWINGS

The accompanying drawings are used to better understand the solution, and do not constitute a limitation on the application, in which:
FIG. 1 is a flowchart of a speech recognition method according to an embodiment of the present disclosure.
FIG. 2 is a flowchart of another speech recognition method according to an embodiment of the present disclosure.
FIG. 3A is a flowchart of another speech recognition method according to an embodiment of the present disclosure.
FIG. 3B is a block diagram of a speech recognition system according to an embodiment of the present disclosure.
FIG. 4 is a block diagram of a speech recognition apparatus according to an embodiment of the present disclosure.
FIG. 5 is a block diagram of an electronic device used to implement a speech recognition method according to an embodiment of the present disclosure.

### DETAILED DESCRIPTION

The following describes the exemplary embodiments of the present disclosure with reference to the accompanying drawings, which includes various details of the embodiments of the present disclosure to facilitate understanding, which shall be considered merely exemplary. Therefore, those of ordinary skill in the art should recognize that various changes and modifications can be made to the embodiments described herein without departing from the scope and spirit of the present disclosure. For clarity and conciseness, descriptions of well-known functions and structures are omitted in the following description.

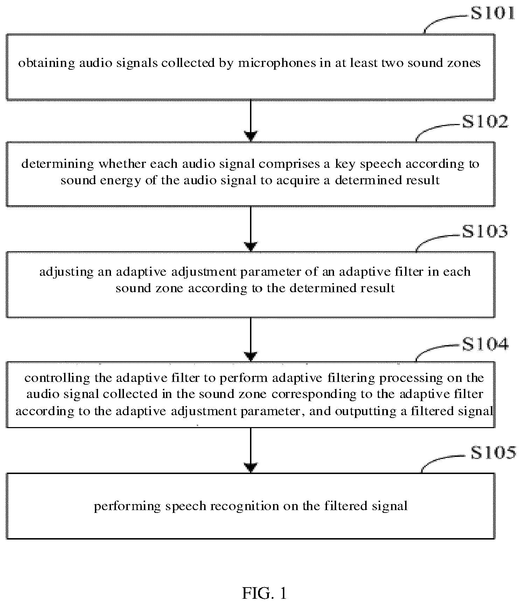

FIG. 1 is a flowchart of a speech recognition method according to an embodiment of the present disclosure. The embodiments of the present disclosure are applicable to the case of performing speech recognition on audio signals collected by microphones in at least two sound zones. The method is executed by a speech recognition apparatus, which is implemented by software and/or hardware, and specifically configured in an electronic device.

As illustrated in FIG. 1, the speech recognition method includes the following steps.

At step S101, audio signals collected by microphones in at least two sound zones are obtained.

The sound zone is an audio signal generating zone or an audio signal collecting zone. It is understandable that in a speech recognition space, in order to be able to collect audio signals from different zones, the speech recognition space is divided into at least two sound zones, and at least one microphone is set in each sound zone for collecting the audio signals in the sound zone.

In an optional implementation of the embodiment of the present disclosure, obtaining the audio signals collected by the microphones in the at least two sound zones may be obtaining the audio signals collected by the microphones in real time. Alternatively, or optionally, the audio signals collected by the microphones at the same time are stored at a local electronic device and other storage devices associated with the electronic device in advance. Correspondingly, when speech recognition is required to be performed, the audio signals are obtained from the local electronic device or other storage devices associated with the electronic device.

At step S 102, it is determined whether each audio signal includes a key speech according to sound energy of the audio signal to acquire a determined result.

Since different audio signals are collected by different microphones, and the microphones are distributed in at least two sound zones, the sound energy of each audio signal is different. The audio signal includes the key speech generated by a preset sound source (i.e., a user) located in the sound zone. Since different sound zones could not be separated in physical space, the microphones in each sound zone also collect sounds generated in other sound zones, which are non-critical sounds. Since the audio signal is also affected by factors such as random noise and mechanical noise during collection, the audio signal may also carry noise information. For convenience, this application collectively refers to the noise information and non-critical sounds as environmental noise.

In an optional implementation of the embodiment of the present disclosure, it is determined whether the audio signal includes the key speech according to the sound energy of the audio signal, which may also be determined according to the sound energy of the key speech and/or the environmental noise.

Optionally, for each audio signal, environmental noise extraction may be performed on the audio signal. Whether the audio signal includes the key speech is determined according to the sound energy of the environmental noise extracted by the audio signal.

Alternatively, or optionally, the environmental noise of the audio signal may be eliminated. According to the sound energy of the audio signal after eliminating the environmental noise, it is determined whether the audio signal includes the key speech.

Alternatively, or optionally, after the environmental noise is extracted or the environmental noise is eliminated from the audio signal, a ratio of sound energy of the audio signal after extracting or eliminating the environmental noise to the sound energy of the original audio signal is determined. According to the ratio, it is determined whether the audio signal includes the key speech.

Whether the audio signal includes the key speech or not could be distinguished by status identifier, or by quantified characterization of sound energy or trend characterization. For example, in two sound zones, the key speech in one sound zone is relatively stronger, and the key speech in the other sound zone is relatively weaker.

At step S103, in accordance with the invention a step size of an adaptive filter in each sound zone is adjusted according to the determined result.

At least one adaptive filter is set in each sound zone to filter the audio signal in the sound zone, so as to strengthen the audio signal in the sound zone and/or suppress the audio signal in other sound zones.

When using the adaptive filter, time-variant characteristics of the input signal are generally adapted by adjusting the adaptive adjustment parameter of the adaptive filter, so that an error between an output signal of the filter and a desired signal is minimized. Since the audio signal is a time-varying signal, there are certain differences among the audio signals of different sound zones, thus it is necessary to determine the adaptive adjustment parameter of the adaptive filter of each sound zone before using the adaptive filter to filter the audio signal.

In an optional implementation of the embodiment of the present disclosure, at least two adaptive adjustment parameters are set in advance. Correspondingly, according to the determined result, the adaptive adjustment parameter of the adaptive filter in each sound zone is adjusted, which may be that the corresponding adaptive adjustment parameter is selected according to the determined result.

In order to enable the adaptive adjustment parameter of the adaptive filter to be adaptive to the audio signal in the sound zone, in another optional implementation of the embodiment of the present disclosure, adjusting the adaptive adjustment parameter of the adaptive filter in each sound zone according to the determined result includes: determining a parameter adjustment strategy for adjusting the adaptive adjustment parameter of the adaptive filter in each sound zone according to the determined result; and adjusting a current adaptive adjustment parameter according to the parameter adjustment strategy to obtain a new adaptive adjustment parameter. The parameter adjustment strategy may be at least one of addition, subtraction, multiplication and division.

In accordance with the invention, the adaptive adjustment parameter is a step size of the adaptive filter. It is understood that the longer the step size, the faster the convergence speed. However, there may be oscillations when the step size is too long, which affects convergence accuracy. The shorter the step size, the greater the amount of calculation and the slower the convergence speed. In order to achieve a compromise between the convergence speed and the convergence accuracy, the adaptive filtering processing in different sound zones are controlled by adjusting the step size.

Optionally, step size calculation strategy of the adaptive filter in the sound zone where the audio signal includes the key speech is adjusted to precise step size strategy, and the step size calculation strategy of the adaptive filter in the sound zone where the audio signal does not include the key speech is adjusted to rough step size strategy. A step size determined by the precise step size strategy is smaller than a step size determined by the rough step size strategy.

It is understood that by reducing the step size of the adaptive filter in the sound zone where the audio signal includes the key speech is located, filtering accuracy of subsequent filtering processing using the adaptive filter is ensured. The step size of the adaptive filter in the sound zone where the audio signal does not include the key speech is located is increased, the amount of data calculation in the sound zone is reduced, and the convergence speed and accuracy of the filtering processing in each sound zone is ensured. Meanwhile, it is convenient to adjust the step size calculation strategy to realize control of the adaptive filtering process of different sound zones, and improve detection sensitivity and accuracy.

It is noted that the precise step size strategy and the rough step size strategy are two absolute step size strategies. Step size sequence used in the filtering process of each step size strategy is accurately set, and sequence values in the step size sequence are used to determine the step size. Optionally, the precise step size strategy and the rough step size strategy are two relative step size strategies, and it is only necessary to ensure that the value of the precise step size strategy is smaller than the value of the rough step size strategy.

At step S104, the adaptive filter is controlled to perform adaptive filtering processing on the audio signal collected in the sound zone corresponding to the adaptive filter according to the step size, and a filtered signal is output.

The adaptive filter is controlled to perform the adaptive filtering processing on the audio signal collected in the sound zone corresponding to the adaptive filter according to the adaptive adjustment parameter, such as the step size, to realize isolation of audio signals of different sound zones.

It is understood that different adaptive adjustment parameters are used for audio signals of different sound zones, the audio signal of the sound zone where the audio signal includes the key speech is enhanced, and the audio signal of the sound zone where the audio signal does not include the key speech is weakened accordingly, so that signal accuracy of the obtained filtered signal is improved, which is equivalent to realizing sound zone isolation.

It is noted that for different sound zones, due to differences in the positions and numbers of sound sources, key speeches of different sound zones may be different. In the adaptive filtering process, the adaptive adjustment parameter of each sound zone is determined respectively, and the audio signal of each sound zone is processed in parallel according to the determined adaptive adjustment parameter, which improves processing efficiency and avoids omission of audio signal in each zone, thus comprehensiveness of the processing result is improved.

At step S105, speech recognition is performed on the filtered signal.

Speech recognition is performed on the filtered signal of each sound zone to obtain the corresponding speech recognition result.

In the embodiments of the present disclosure, the audio signals collected by the microphones in the at least two sound zones are obtained. It is determined whether each audio signal includes the key speech according to the sound energy of the audio signal to acquire the determined result. The adaptive adjustment parameter of the adaptive filter in each sound zone is adjusted according to the determined result. The adaptive filter is controlled to perform the adaptive filtering processing on the audio signal collected in the sound zone corresponding to the adaptive filter according to the adaptive adjustment parameter, and the filtered signal is output. The speech recognition is performed on the filtered signal. In the above technical solution, the adaptive adjustment parameter of the adaptive filter in the sound zone is determined according to the determined result, to realize enhancement of the audio signal including the key speech and weakening of the audio signal not including the key speech, and differentiation of the adaptive filtering process is realized. The adaptive filter is controlled to perform the adaptive filtering processing on the audio signal collected in the sound zone corresponding to the adaptive filter according to the adaptive adjustment parameter, thus signal-to-noise ratio of the filtered signal is improved, thereby improving accuracy of the speech recognition result, which is equivalent to distinguishing the audio signal filtering processing of different sound zones through the sound zone isolation, and the accuracy of speech recognition and the amount of calculation are improved. Meanwhile, in the adaptive filtering process, the audio signal of each sound zone is subjected to the adaptive filtering processing, which realizes parallel processing of the audio signals in different sound zones, avoids the omission of audio signal processing, and ensures the comprehensiveness of the filtering processing.

On the basis of the above technical solutions, after performing the speech recognition on the filtered signal, the method further includes: determining a sound zone where the audio signal includes the key speech as a target sound zone; and waking up a speech recognition engine for recognizing subsequent audio signals of the target sound zone when a speech recognition result of the target sound zone includes a wake-up word.

The wake-up words may include greetings such as "hi" and "hello", and/or engine identifiers of a speech recognition engine, such as names.

For example, when the speech recognition engine is installed in a smart speaker with a name "D", and when the speech recognition result is "D, please play music", the speech recognition engine D of the target sound zone corresponding to the speech recognition result is waken up. For example, after receiving the reply of "what kind of music do you like?" form the speech recognition engine D, a sound source (user) in the target sound zone interacts with the speech recognition engine D according to requirements, such as informing names of the songs.

It is understood that the above technical solution realizes automatic control of the speech recognition engine by applying the speech recognition result to application scenarios controlled by the speech recognition engine, meanwhile application scenarios of the speech recognition method according to the present disclosure are enriched.

On the basis of the above technical solutions, after performing the speech recognition on the filtered signal, the method further includes: responding to a speech recognition result of the filtered signal according to the speech recognition result in combination with a setting function of the sound zone.

The setting function may be a control operation of auxiliary devices installed in the system carrying the electronic device.

For example, when the electronic device is an in-vehicle speech recognition apparatus and the system is a vehicle, accessory devices may be at least one of windows, doors, seats, and an air conditioner in the vehicle.

For example, the at least two sound zones include a driver sound zone and at least one non-driver sound zone in interior space of the vehicle, so as to realize quick control of the driver sound zone and the at least one non-driver sound zone in the vehicle.

For example, when the speech recognition result is "ON", if the sound zone corresponding to the speech recognition result is the driver sound zone, the accessory devices associated with the driver sound zone are turned on. If the sound zone corresponding to the speech recognition result is the non-driver sound zone, the accessory devices associated with the sound zone corresponding to the speech recognition result are turned on. The accessory devices are preset accessory devices, such as car windows.

For example, if the speech recognition result also includes keywords corresponding to names of the accessory devices, the accessory devices are determined according to the keywords, and the control operation of the accessory devices is realized according to the determined accessory devices.

For example, when the speech recognition result is "close the window", if the sound zone corresponding to the speech recognition result is the driver sound zone, then the window associated with the driver speech zone is closed. If the sound zone corresponding to the speech recognition result is the non-driver sound zone, the window associated with the sound zone corresponding to the speech recognition result is closed.

It is understood that the above technical solution implements quick control of setting functions by applying the speech recognition result to the application scenarios of speech control, so that the application scenarios of the speech recognition method in this present disclosure is enriched.

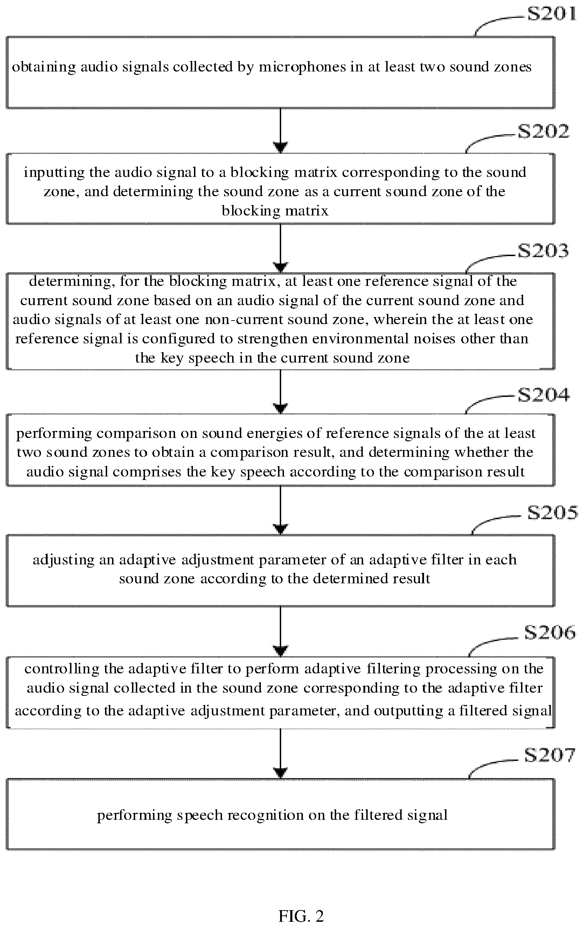

FIG. 2 is a flowchart of another speech recognition method according to an embodiment of the present disclosure. This method is optimized and improved on the basis of the above technical solutions.

Further, the operation of "determining whether each audio signal comprises a key speech according to sound energy of the audio signal to acquire a determined result" is refined into "inputting the audio signal to a blocking matrix corresponding to the sound zone, and determining the sound zone as a current sound zone of the blocking matrix; determining, for the blocking matrix, at least one reference signal of the current sound zone based on an audio signal of the current sound zone and audio signals of at least one non-current sound zone, wherein the at least one reference signal is configured to strengthen environmental noises other than the key speech in the current sound zone; and performing comparison on sound energies of reference signals of the at least two sound zones to obtain a comparison result, and determining whether the audio signal comprises the key speech according to the comparison result", to complete the mode of determining whether the audio signal includes the key speech.

As illustrated in FIG. 2, the speech recognition method includes the following steps. At step S201, audio signals collected by microphones in at least two sound zones are obtained.

At step S202, in accordance with the invention, the audio signal is input into a blocking matrix corresponding to the sound zone, and the sound zone is determined as a current sound zone of the blocking matrix.

The blocking matrix is configured to suppress desired signals in the sound zone, such as the audio signal including the key speech, so as to avoid cancellation of the desired signals in the subsequent adaptive filtering processing and to ensure signal integrity of the final filtered signal.

At step S203, in accordance with the invention, for the blocking matrix, at least one reference signal of the current sound zone is determined based on an audio signal of the current sound zone and audio signals of at least one non-current sound zone, in which the at least one reference signal is configured to strengthen environmental noises other than the key speech in the current sound zone.

For example, the blocking matrix of the current sound zone is adopted to determine the environmental noise of the audio signal of the current sound zone relative to the input audio signal of the non-current sound zone, and relatively weaken the key speech of the current sound zone based on the audio signal of the current sound zone and the audio signals of the at least one non-current sound zone, and/or relatively strengthen the environmental noise in the current sound zone relative to the non-current sound zone to obtain the reference signal.

For example, the blocking matrix of the current sound zone is adopted to determine the reference signal corresponding to each non-current sound zone based on the audio signal of the current sound zone and the audio signals of the at least one non-current sound zone. When determining the reference signal for a non-current sound zone, the blocking matrix of the current sound zone is adopted to determine the environmental noise of the audio signal of the current sound zone relative to the audio signal of the non-current sound zone based on the audio signal of the current sound zone and the audio signal of the non-current sound zone, and relatively weaken the key speech of the current sound zone, and/or relatively strengthen the environmental noise in the current sound zone relative to the non-current sound zone to obtain the reference signal of the non-current sound zone.

At step S204, in accordance with the invention, comparison is performed on sound energies of reference signals of the at least two sound zones to obtain a comparison result, and it is determined whether the audio signal includes the key speech according to the comparison result.

It should be noted that, since the differences among the reference signals of different sound zones are large, by comparing the sound energies of the reference signals of each sound zone, it is determined whether the audio signal includes the key speech according to the comparison result.

It is understood that when at least two reference signals are included in the same sound zone, reference signals are fused by means of weighted sum into one reference signal, and comparison is performed on sound energies of the fused reference signals of each sound zone.

In an optional implementation of the embodiment of the present disclosure, the comparison is performed on the sound energies of the reference signals (or the fused reference signal) of each sound zone, the sound zone with the minimum sound energy is determined as the sound zone where the audio signal includes the key speech according to the comparison result, and other audio signals are determined as do not include the key speech.

It should be noted that when the sound energy of the reference signal is small, it indicates that the environmental noise in the audio signal of the sound zone is relatively small, and the audio signal of the sound zone is more likely to include the key speech, so that the sound zone with the minimum sound energy is determined as the sound zone where the audio signal includes the key speech. The audio signals of other sound zones are determined as the sound zone where the audio signal does not include the key speech. It is understandable that in the foregoing technical solution, whether the audio signal includes the key speech is determined according to the sound energy of the reference signal, thereby enriching the manner of determining the state of the key speech.

In an optional implementation of the embodiment of the present disclosure, the comparison is performed on the sound energies of the reference signals of the at least two sound zones to obtain the comparison result, and a relative order of probabilities of each audio signal including the key speech is determined according to the comparison result. An audio signal collected in a sound zone with the maximum probability is determined as an audio signal including the key speech according to the comparison result, and it is determined that audio signals collected in sound zones other than the sound zone with the maximum probability do not include the key speech.

It should be noted that the probability that the audio signal includes the key speech is negatively related to the sound energy of the reference signal of the sound zone. Therefore, the lower the sound energy of the reference signal, the lower the environmental noise in the audio signal of the sound zone, and the audio signal in the sound zone is more likely to include the key speech, that is, the higher the probabilities of each audio signal including the key speech ranks in the relative order, namely, the probability is the largest.

For example, when determining the relative order of the probabilities of each audio signal including the key speech, specific values of the probabilities of each audio signal including the key speech are determined, and then the sound zone corresponding to the probability with the largest value is determined as the sound zone where the audio signal includes the key speech. Alternatively, there is no need to determine the specific values of the probabilities, and it is only necessary to sort the relative magnitudes of the probabilities of each audio signal.

It is understood that in the above technical solution, whether the audio signal includes the key speech is determined according to the relative order of the probabilities of each audio signal including the key speech instead of the sound energy of each reference signal, thereby enriching the manner of determining whether the audio signal includes the key speech.

At step S205, an adaptive adjustment parameter of an adaptive filter in each sound zone is adjusted according to the determined result.

At step S206, the adaptive filter is controlled to perform the adaptive filtering processing on the audio signal collected in the sound zone corresponding to the adaptive filter according to the adaptive adjustment parameter, and a filtered signal is output.

At step S207, speech recognition is performed on the filtered signal.

In the technical solution of the present disclosure, determining whether each audio signal includes the key speech is refined into: determining the reference signals of each sound zone through a blocking matrix corresponding to the sound zone, performing the comparison on the sound energies of the reference signals of each sound zone to obtain a comparison result, and determining whether the audio signal includes the key speech according to the comparison result. Therefore, the mode for determining whether the audio signal includes the key speech is improved, and data support is provided for subsequent determination of the adaptive adjustment parameter of the adaptive filter of each sound zone.

In an optional implementation of the embodiment of the present disclosure, it is also possible to adopt at least two fixed parameter filters corresponding to the sound zone to perform the filter processing on the audio signal of each sound zone to generate the desired signals, before controlling the adaptive filter to perform the adaptive filtering processing on the audio signal collected in the sound zone corresponding to the adaptive filter according to the adaptive adjustment parameter. The desired signal is configured to strengthen the key speech in the sound zone. Correspondingly, controlling the adaptive filter to perform adaptive filtering processing on the audio signal collected in the sound zone corresponding to the adaptive filter according to the adaptive adjustment parameter, and outputting the filtered signal includes: inputting the desired signal and the reference signal of the sound zone into the adaptive filter corresponding to the sound zone; and controlling the adaptive filter to perform the adaptive filtering processing on the desired signal and the reference signal by adopting the adaptive adjustment parameter, and outputting the filtered signal.

It is understood that the key speech in the audio signal is enhanced by filtering the audio signal with the fixed parameter filter, and the environmental noise in the audio signal is relatively weakened, thus primary noise reduction processing of the audio signal is realized to obtain the desired signal, and the signal-to-noise ratio of the audio signal is improved. Correspondingly, the desired signal (i.e., the audio signal after strengthening the key speech), and the reference signal (i.e., the audio signal after strengthening the environmental noise) are input into the adaptive filter corresponding to the sound zone, so that the desired signal is processed through the adaptive filter for secondary noise reduction processing. Therefore, the reference signal is subtracted from the desired signal to obtain the filtered signal, which further improves the signal-to-noise ratio of the audio signal. Serial execution of the secondary noise reduction processing significantly improves the signal-to-noise ratio of the audio signal while avoiding omission of the key speech in the audio signal.

Optionally, the adaptive filter is an adaptive beamforming filter, and the fixed parameter filters are fixed parameter beamforming filters, and the adaptive beamforming filter and the fixed parameter beamforming filters are used in combination with the blocking matrix to further improve the speech recognition mechanism of the present disclosure. Correspondingly, initial parameters of the fixed parameter beamforming filters and blocking matrixes are determined according to sound transmission time delays among the microphones in the at least two sound zones.

In detail, different microphones are installed at different positions, there is a certain error in the distances to the sound source (i.e., the user). Therefore, when the sound source emits sound, different microphones may receive sound from the sound source at different times. Correspondingly, the phases of the audio signal collected by the microphones have a certain time delay. Certainly, microphone installation angle and sound propagation speed also have an impact on the time delay. In order to improve the accuracy of the calculation results and further improves the signal-to-noise ratio of the filtered signal, when determining the sound transmission delay, factors such as the microphone installation angle and the sound propagation speed are taken into account.

Correspondingly, for a sound zone, when the desired signal is generated, after eliminating phase delay between the audio signal of the sound zone and the audio signal of other sound zones, the relevant signal (i.e., the audio signal of the same sound source) is enhanced and the non-correlated signal (i.e., the audio signal of different sound sources) is not enhanced through signal superposition, thus the relevant signal is relatively strengthened, and the non-correlated signal is relatively weakened, and enhancement of the key speech in the audio signal of the sound zone is realized, thereby improving the signal-to-noise ratio of the processed audio signal.

Further, the blocking matrix does not consider the delay effect, and directly performs the signal superposition on the signals of different sound zones, the strength of the related signal is eliminated and the strength of the non-correlated signal is retained, that is, the non-correlated signal is relatively strengthened and the related signal is relatively weakened.

Certainly, the fixed parameter beamforming filters used in the above technical solution are not limited to delay accumulation, and additional filter combination manners could also be used to process the audio signal of each sound zone to enhance the signal of the current sound zone, and weaken the signal of other sound zones.

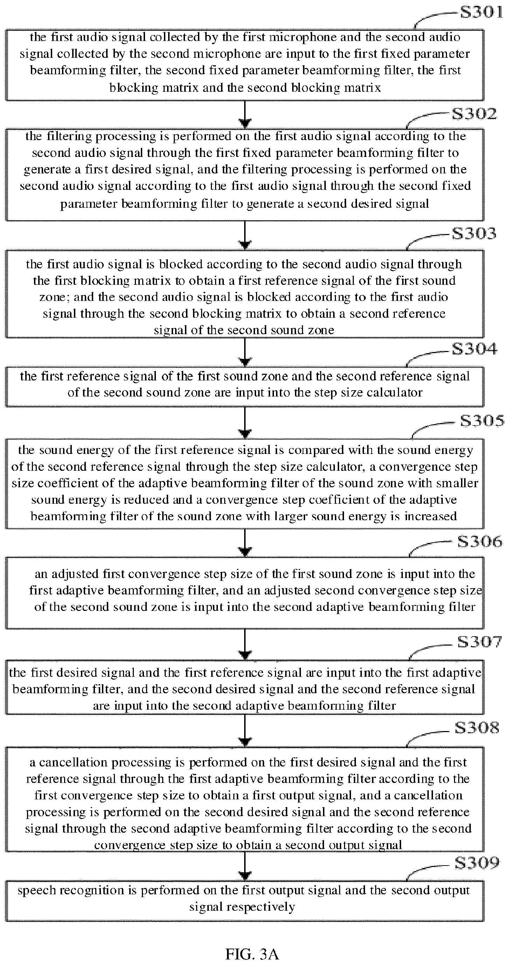

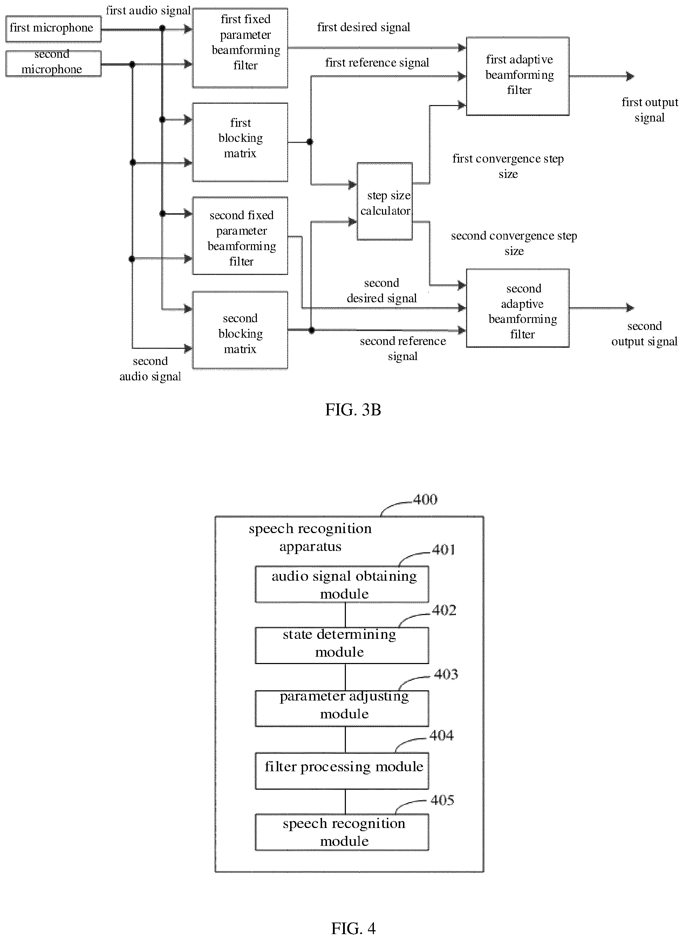

FIG. 3A is a flowchart of another speech recognition method according to an embodiment of the present disclosure. This method provides a preferred embodiment based on the above-mentioned technical solutions, and speech recognition process in speech recognition space provided with two microphones is described in combination with the block diagram of the speech recognition system shown in FIG. 3B.

The speech recognition space includes a first sound zone and a second sound zone. A first microphone is arranged in the first sound zone for collecting a first audio signal in the first sound zone. A second microphone is arranged in the second sound zone to collect a second audio signal in the second sound zone.

In the speech recognition system, a first fixed parameter beamforming filter, a first blocking matrix and a first adaptive beamforming filter are set for the first sound zone. A second fixed parameter beamforming filter, a second blocking matrix and a second adaptive beamforming filter are set for the second sound zone. A step size calculator is also provided in the speech recognition system.

As illustrated in FIG. 3A, the speech recognition method includes the following steps.

At step S301, the first audio signal collected by the first microphone and the second audio signal collected by the second microphone are input to the first fixed parameter beamforming filter, the second fixed parameter beamforming filter, the first blocking matrix and the second blocking matrix.

At step S302, the filtering processing is performed on the first audio signal according to the second audio signal through the first fixed parameter beamforming filter to generate a first desired signal, and the filtering processing is performed on the second audio signal according to the first audio signal through the second fixed parameter beamforming filter to generate a second desired signal.

The first desired signal is used to strengthen a first key speech in the first sound zone. The second desired signal is used to strengthen a second key speech in the second sound zone.

At step S303, the first audio signal is blocked according to the second audio signal through the first blocking matrix to obtain a first reference signal of the first sound zone; and the second audio signal is blocked according to the first audio signal through the second blocking matrix to obtain a second reference signal of the second sound zone.

The first reference signal is used to strengthen the environmental noise except the first key speech in the first sound zone, and the second reference signal is used to strengthen the environmental noise except the second key speech in the second sound zone.

It should be noted that step S302 and step S303 could be performed sequentially or simultaneously, and order of the two steps is not limited in the present disclosure.

At step S304, the first reference signal of the first sound zone and the second reference signal of the second sound zone are input into the step size calculator.

At step S305, the sound energy of the first reference signal is compared with the sound energy of the second reference signal through the step size calculator, a convergence step size coefficient of the adaptive beamforming filter of the sound zone with smaller sound energy is reduced and a convergence step coefficient of the adaptive beamforming filter of the sound zone with larger sound energy is increased.

At step S306, an adjusted first convergence step size of the first sound zone is input into the first adaptive beamforming filter, and an adjusted second convergence step size of the second sound zone is input into the second adaptive beamforming filter.

At step S307, the first desired signal and the first reference signal are input into the first adaptive beamforming filter, and the second desired signal and the second reference signal are input into the second adaptive beamforming filter.

It should be noted that steps S306 and S307 are performed sequentially or simultaneously, and signal sequence of the two steps is not limited in the present disclosure.

At step S308, a cancellation processing is performed on the first desired signal and the first reference signal through the first adaptive beamforming filter according to the first convergence step size to obtain a first output signal, and a cancellation processing is performed on the second desired signal and the second reference signal through the second adaptive beamforming filter according to the second convergence step size to obtain a second output signal.

At step S309, speech recognition is performed on the first output signal and the second output signal respectively.

In a vehicle, vehicle accessories such as windows, seats or air conditioners in the corresponding sound zone are controlled to be turned on/off according to the speech recognition result. When the wake-up words are included in the speech recognition result, the speech recognition engine in the smart speaker is waken up, and then after collecting the audio signal in the sound zone where the speech recognition result including the wake-up words is located, collected audio signals are recognized through the speech recognition engine of the smart speaker.

FIG. 4 is a block diagram of a speech recognition apparatus 400 according to an embodiment of the present disclosure. This embodiment is applicable for performing speech recognition on the audio signals collected by the microphones set in the at least two sound zones. The apparatus is implemented by software and/or hardware, and is specifically configured in an electronic device.

As illustrated in FIG. 4, the speech recognition apparatus 400 includes: an audio signal obtaining module 401, a state determining module 402, a parameter adjusting module 403, a filter processing module 404 and a speech recognition module 405. The audio signal obtaining module 401 is configured to obtain audio signals collected by microphones in at least two sound zones. The state determining module 402 is configured to determine whether each audio signal includes a key speech according to sound energy of the audio signal to acquire a determined result. The parameter adjusting module 403 is configured to adjust an adaptive adjustment parameter of an adaptive filter in each sound zone according to the determined result. The filter processing module 404 is configured to control the adaptive filter to perform adaptive filtering processing on the audio signal collected in the sound zone corresponding to the adaptive filter according to the adaptive adjustment parameter, and output a filtered signal. The speech recognition module 405 is configured to perform speech recognition on the filtered signal.

In the embodiments of the present invention, the audio signals collected by the microphones in the at least two sound zones are obtained. It is determined whether each audio signal includes the key speech according to the sound energy of the audio signal to acquire the determined result. The step size of the adaptive filter in each sound zone is adjusted according to the determined result. The adaptive filter is controlled to perform the adaptive filtering processing on the audio signal collected in the sound zone corresponding to the adaptive filter according to the adaptive adjustment parameter, and the filtered signal is output. The speech recognition is performed on the filtered signal. In the above technical solution, the adaptive adjustment parameter of the adaptive filter of the sound zone is determined according to the determined result, to realize enhancement of the audio signal including the key speech and weakening of the audio signal not including the key speech, and differentiation of the adaptive filtering process is realized. The adaptive filter is controlled to perform the adaptive filtering processing on the audio signal collected in the sound zone corresponding to the adaptive filter according to the adaptive adjustment parameter, thus signal-to-noise ratio of the filtered signal is improved, as well as the accuracy of the speech recognition result. Meanwhile, in the adaptive filtering process, the audio signal of each sound zone is subjected to the adaptive filtering process, which realizes parallel processing of audio signals in different sound zones, avoids the omission of audio signal processing, and ensures the comprehensiveness of the filtering process.

In accordance with the invention, the state determining module 402 includes: an audio signal inputting unit, a reference signal determining unit and a state determining unit.

The audio signal inputting unit is configured to input the audio signal to a blocking matrix corresponding to the sound zone, and determine the sound zone as a current sound zone of the blocking matrix.

The reference signal determining unit is configured to determine, for the blocking matrix, at least one reference signal of the current sound zone based on an audio signal of the current sound zone and audio signals of at least one non-current sound zone, in which the at least one reference signal is configured to strengthen environmental noises other than the key speech in the current sound zone.

The state determining unit is configured to perform comparison on sound energies of reference signals of the at least two sound zones to obtain a comparison result, and determine whether the audio signal includes the key speech according to the comparison result.

Moreover, the state determining unit includes: a state determining subunit. The state determining subunit is configured to perform the comparison on the sound energies of reference signals of the at least two sound zones, determine that an audio signal collected in a sound zone with the smallest sound energy includes the key speech, and determine that audio signals collected in sound zones other than the sound zone with the smallest sound energy do not includes the key speech.

Furthermore, the state determining unit includes: a probability relative order determining subunit and a state determining subunit. The probability relative order determining subunit is configured to perform the comparison on the sound energies of the reference signals of the at least two sound zones to obtain the comparison result, and determine a relative order of probabilities of each audio signal including the key speech according to the comparison result. The state determining subunit is configured to determine that an audio signal collected in a sound zone with the maximum probability includes the key speech according to the comparison result, and determine that audio signals collected in sound zones other than the sound zone with the maximum probability do not include the key speech.

The parameter adjusting module 403 includes: a step size adjusting unit. The step size adjusting unit is configured to adjust step size calculation strategy of the adaptive filter in the sound zone where the audio signal includes the key speech to precise step size strategy; and adjust the step size calculation strategy of the adaptive filter in the sound zone where the audio signal does not include the key speech to rough step size strategy.

A step size determined by the precise step size strategy is smaller than a step size determined by the rough step size strategy.

Moreover, the apparatus further includes: a desired signal generating module. The desired signal generating module is configured to, before controlling the adaptive filter to perform adaptive filtering processing on the audio signal collected in the sound zone corresponding to the adaptive filter according to the adaptive adjustment parameter, perform filtering processing on the audio signal of the sound zone by adopting at least two fixed parameter filters corresponding to the sound zone, so as to generate a desired signal. The desired signal is configured to strengthen the key speech in the sound zone

Correspondingly, the filter processing module 404 includes: a signal inputting unit and a filter processing unit. The signal inputting unit is configured to input the desired signal and the reference signal of the sound zone into the adaptive filter corresponding to the sound zone. The filter processing unit is configured to control the adaptive filter to perform the adaptive filtering processing on the desired signal and the reference signal by adopting the adaptive adjustment parameter, and output the filtered signal.

The adaptive filter is an adaptive beamforming filter, and the fixed parameter filters are fixed parameter beamforming filters, and initial parameters of the fixed parameter beamforming filters and blocking matrixes are determined according to the sound transmission time delays among the microphones in the at least two sound zones.

Furthermore, the apparatus further includes: a target sound zone determining module and an engine waking up module. The target sound zone determining module is configured to, after performing the speech recognition on the filtered signal, determine a sound zone where the audio signal includes the key speech as a target sound zone. The engine waking up module is configured to wake up a speech recognition engine for recognizing subsequent audio signals of the target sound zone when a speech recognition result of the target sound zone includes a wake-up word.

The apparatus further includes: a recognition result responding module. The recognition result responding module is configured to, after performing the speech recognition on the filtered signal, respond to a speech recognition result of the filtered signal according to the speech recognition result in combination with a setting function of the sound zone.

The at least two sound zones include a driver sound zone and at least one non-driver sound zone.

The above-mentioned speech recognition apparatus executes the speech recognition method according to any embodiment of the present disclosure, and has the functional modules and beneficial effects corresponding to the speech recognition method.

According to the embodiments of the present disclosure, the present disclosure also provides an electronic device and a readable storage medium.

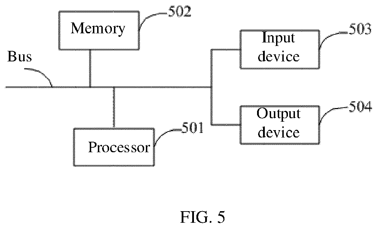

FIG. 5 is a block diagram of an electronic device that implements the speech recognition method according to an embodiment of the present disclosure. Electronic devices are intended to represent various forms of digital computers, such as laptop computers, desktop computers, workbenches, personal digital assistants, servers, blade servers, mainframe computers, and other suitable computers. Electronic devices may also represent various forms of mobile devices, such as personal digital processing, cellular phones, smart phones, wearable devices, and other similar computing devices. The components shown here, their connections and relations, and their functions are merely examples, and are not intended to limit the implementation of the disclosure described and/or required herein.

As illustrated in FIG. 5, the electronic device includes: one or more processors 501, a memory 502, and interfaces for connecting various components, including a high-speed interface and a low-speed interface. The various components are interconnected using different buses and can be mounted on a common mainboard or otherwise installed as required. The processor may process instructions executed within the electronic device, including instructions stored in or on the memory to display graphical information of the GUI on an external input/output device such as a display device coupled to the interface. In other embodiments, a plurality of processors and/or buses can be used with a plurality of memories and processors, if desired. Similarly, a plurality of electronic devices can be connected, each providing some of the necessary operations (for example, as a server array, a group of blade servers, or a multiprocessor system). A processor 501 is taken as an example in FIG. 5.

The memory 502 is a non-transitory computer-readable storage medium according to the present disclosure. The memory stores instructions executable by at least one processor, so that the at least one processor executes the speech recognition method according to the present disclosure. The non-transitory computer-readable storage medium of the present disclosure stores computer instructions, which are used to cause a computer to execute the speech recognition method according to the present disclosure.

As a non-transitory computer-readable storage medium, the memory 502 is configured to store non-transitory software programs, non-transitory computer executable programs and modules, such as program instructions/modules corresponding to the speech recognition method in the embodiment of the present disclosure (For example, the audio signal obtaining module 401, the state determining module 402, the parameter adjusting module 403, the filter processing module 404, and the speech recognition module 405 shown in FIG. 4). The processor 501 executes various functional applications and data processing of the server by running non-transitory software programs, instructions, and modules stored in the memory 502, that is, implementing the speech recognition method in the foregoing method embodiments.

The memory 502 may include a storage program area and a storage data area, where the storage program area may store an operating system and application programs required for at least one function. The storage data area may store data created according to the use of the electronic device, and the like. In addition, the memory 502 may include a high-speed random access memory, and a non-transitory memory, such as at least one magnetic disk storage device, a flash memory device, or other non-transitory solid-state storage device. In some embodiments, the memory 502 may optionally include a memory remotely disposed with respect to the processor 501, and these remote memories may be connected to the electronic device through a network. Examples of the above network include, but are not limited to, the Internet, an intranet, a local area network, a mobile communication network, and combinations thereof.

The electronic device for implementing the speech recognition method may further include: an input device 503 and an output device 504. The processor 501, the memory 502, the input device 503, and the output device 504 may be connected through a bus or in other manners. In FIG. 5, the connection through the bus is taken as an example.

The input device 503 may receive inputted numeric or character information, and generate key signal inputs related to user settings and function control of an electronic device, such as a touch screen, a keypad, a mouse, a trackpad, a touchpad, an indication rod, one or more mouse buttons, trackballs, joysticks and other input devices. The output device 504 may include a display device, an auxiliary lighting device (for example, an LED), a haptic feedback device (for example, a vibration motor), and the like. The display device may include, but is not limited to, a liquid crystal display (LCD), a light emitting diode (LED) display, and a plasma display. In some embodiments, the display device may be a touch screen.

Various embodiments of the systems and technologies described herein may be implemented in digital electronic circuit systems, integrated circuit systems, application specific integrated circuits (ASICs), computer hardware, firmware, software, and/or combinations thereof. These various embodiments may be implemented in one or more computer programs, which may be executed and/or interpreted on a programmable system including at least one programmable processor. The programmable processor may be dedicated or general purpose programmable processor that receives data and instructions from a storage system, at least one input device, and at least one output device, and transmits the data and instructions to the storage system, the at least one input device, and the at least one output device.

These computing programs (also known as programs, software, software applications, or code) include machine instructions of a programmable processor and may utilize high-level processes and/or object-oriented programming languages, and/or assembly/machine languages to implement these calculation procedures. As used herein, the terms "machine-readable medium" and "computer-readable medium" refer to any computer program product, device, and/or device used to provide machine instructions and/or data to a programmable processor (for example, magnetic disks, optical disks, memories, programmable logic devices (PLDs), including machine-readable media that receive machine instructions as machine-readable signals. The term "machine-readable signal" refers to any signal used to provide machine instructions and/or data to a programmable processor.

In order to provide interaction with a user, the systems and techniques described herein may be implemented on a computer having a display device (e.g., a Cathode Ray Tube (CRT) or a Liquid Crystal Display (LCD) monitor for displaying information to a user); and a keyboard and pointing device (such as a mouse or trackball) through which the user can provide input to the computer. Other kinds of devices may also be used to provide interaction with the user. For example, the feedback provided to the user may be any form of sensory feedback (e.g., visual feedback, auditory feedback, or haptic feedback), and the input from the user may be received in any form (including acoustic input, sound input, or tactile input).

The systems and technologies described herein can be implemented in a computing system that includes background components (for example, a data server), or a computing system that includes middleware components (for example, an application server), or a computing system that includes front-end components (For example, a user computer with a graphical user interface or a web browser, through which the user can interact with the implementation of the systems and technologies described herein), or include such background components, intermediate computing components, or any combination of front-end components. The components of the system may be interconnected by any form or medium of digital data communication (e.g., a communication network). Examples of communication networks include: local area network (LAN), wide area network (WAN), and the Internet.

The computer system may include a client and a server. The client and server are generally remote from each other and interacting through a communication network. The client-server relation is generated by computer programs running on the respective computers and having a client-server relation with each other.

In an optional implementation of the embodiments of the present disclosure, the electronic device is a vehicle-mounted speech recognition apparatus configured on a vehicle, and the vehicle-mounted speech recognition apparatus includes at least two microphones arranged in at least two sound zones.

According to the technical solution of the embodiments of the present disclosure, the adaptive adjustment parameter of the adaptive filter in each sound zone is adjusted according to the determined result obtained by determining whether each audio signal includes the key speech according to the sound energy of the audio signal, so that the audio signal including the key speech is strengthen, and the audio signal that does not include the key speech is weaken, so as to realize differentiation of the adaptive filtering processing. Therefore, the adaptive filter is controlled to perform adaptive filtering processing on the audio signal collected in the sound zone corresponding to the adaptive filter according to the adaptive adjustment parameter, thereby improving the accuracy of the speech recognition result. Meanwhile, the adaptive filtering processing is performed on the audio signal collected in the sound zone in the adaptive filtering process, the audio signal of the sound zone is adaptively filtered, which realizes parallel processing of the audio signal in the sound zone, avoids omission of the audio signal processing, and ensures the comprehensiveness of the filtering processing.

It should be understood that various forms of processes shown above may be used to reorder, add, or delete steps. For example, the steps described in the present disclosure may be performed in parallel, sequentially, or in different orders. As long as the desired results of the technical solutions disclosed in the present disclosure can be achieved, no limitation is made herein.

## Claims

1. A speech recognition method, comprising:
obtaining (S101) audio signals collected by microphones in at least two sound zones;
determining (S 102) whether each audio signal comprises a key speech according to sound energy of the audio signal to acquire a determined result;
adjusting (S103) a step size of an adaptive filter in each sound zone according to the determined result;
controlling (S104) the adaptive filter to perform adaptive filtering processing on the audio signal collected in the sound zone corresponding to the adaptive filter according to the step size, so that the audio signal of the sound zone where the audio signal includes the key speech is enhanced, and the audio signal of the sound zone where the audio signal does not include the key speech is weakened accordingly, and outputting a filtered signal; and
performing (S105) speech recognition on the filtered signal;
**characterized in that** the determining (S102) whether each audio signal comprises the key speech according to the sound energy of the audio signal comprises:
inputting (S202) the audio signal to a blocking matrix corresponding to the sound zone, and determining the sound zone as a current sound zone of the blocking matrix;
determining (S203), for the blocking matrix, at least one reference signal of the current sound zone based on an audio signal of the current sound zone and audio signals of at least one non-current sound zone, wherein the at least one reference signal is configured to strengthen environmental noises other than the key speech in the current sound zone; and
performing (S204) comparison on sound energies of reference signals of the at least two sound zones to obtain a comparison result, and determining whether the audio signal comprises the key speech according to the comparison result.

2. The method according to claim 1, wherein the performing (S204) the comparison on the sound energies of reference signals of the at least two sound zones to obtain the comparison result, and determining whether the audio signal comprises the key speech according to the comparison result comprise:
performing the comparison on the sound energies of reference signals of the at least two sound zones, determining that an audio signal collected in a sound zone with the smallest sound energy comprises the key speech, and determining that audio signals collected in sound zones other than the sound zone with the smallest sound energy do not comprise the key speech.

3. The method according to claim 1, wherein the performing (S204) the comparison on the sound energies of reference signals of the at least two sound zones to obtain the comparison result, and determining whether the audio signal comprises the key speech according to the comparison result comprise:
performing the comparison on the sound energies of the reference signals of the at least two sound zones to obtain the comparison result, and determining a relative order of probabilities of each audio signal comprising the key speech according to the comparison result; and
determining that an audio signal collected in a sound zone with the maximum probability comprises the key speech according to the comparison result, and determining that audio signals collected in sound zones other than the sound zone with the maximum probability do not comprise the key speech.

4. The method according to any one of claims 1-3, wherein the adjusting (S 103) the step size of the adaptive filter in each sound zone according to the determined result comprises:
adjusting step size calculation strategy of the adaptive filter in the sound zone where the audio signal comprises the key speech to precise step size strategy; and
adjusting the step size calculation strategy of the adaptive filter in the sound zone where the audio signal does not comprise the key speech to rough step size strategy; wherein
a step size determined by the precise step size strategy is smaller than a step size determined by the rough step size strategy.

5. The method according to claim 1, wherein before controlling the adaptive filter to perform adaptive filtering processing on the audio signal collected in the sound zone corresponding to the adaptive filter according to the step size, the method further comprises:
performing primary noise reduction processing on the audio signal of the sound zone by adopting at least two fixed parameter filters corresponding to the sound zone, so as to generate a desired signal, wherein the desired signal is configured to strengthen the key speech in the sound zone; and
controlling the adaptive filter to perform secondary noise reduction processing on the audio signal collected in the sound zone corresponding to the adaptive filter according to the step size, and outputting a filtered signal comprise:
inputting the desired signal and the reference signal of the sound zone into the adaptive filter corresponding to the sound zone; and
controlling the adaptive filter to perform the secondary noise reduction processing on the desired signal and the reference signal by adopting the step size, and outputting the filtered signal.

6. The method according to claim 5, wherein the adaptive filter is an adaptive beamforming filter, and the fixed parameter filters are fixed parameter beamforming filters, and
initial parameters of the fixed parameter beamforming filters and blocking matrixes are determined according to sound transmission time delays among the microphones in the at least two sound zones.

7. The method according to claim 1, wherein after performing (S105) the speech recognition on the filtered signal, the method further comprises:
determining a sound zone where the audio signal comprises the key speech as a target sound zone; and
waking up a speech recognition engine for recognizing subsequent audio signals of the target sound zone when a speech recognition result of the target sound zone comprises a wake-up word.

8. The method according to claim 1, wherein after performing (S105) the speech recognition on the filtered signal, the method further comprises:
responding to a speech recognition result of the filtered signal according to the speech recognition result in combination with a setting function of the sound zone.

9. The method according to claim 8, wherein the at least two sound zones comprise a driver sound zone and at least one non-driver sound zone.

10. A speech recognition apparatus, comprising:
an audio signal obtaining module (401), configured to obtain audio signals collected by microphones in at least two sound zones;
a state determining module (402), configured to determine whether each audio signal comprises a key speech according to sound energy of the audio signal to acquire a determined result;
a parameter adjusting module (403), configured to adjust a step size of an adaptive filter in each sound zone according to the determined result;
a filter processing module (404), configured to control the adaptive filter to perform adaptive filtering processing on the audio signal collected in the sound zone corresponding to the adaptive filter according to the step size to realize enhancement of the audio signal including the key speech and weakening of the audio signal not including the key speech,
and output a filtered signal; and a speech recognition module (405), configured to perform speech recognition on the filtered signal;
**characterized in that** the state determining module (402) comprises:
an audio signal inputting unit, configured to input the audio signal to a blocking matrix corresponding to the sound zone, and determine the sound zone as a current sound zone of the blocking matrix;
a reference signal determining unit, configured to determine, for the blocking matrix, at least one reference signal of the current sound zone based on an audio signal of the current sound zone and audio signals of at least one non-current sound zone, wherein the at least one reference signal is configured to strengthen environmental noises other than the key speech in the current sound zone; and
a state determining unit, configured to perform comparison on sound energies of reference signals of the at least two sound zones to obtain a comparison result, and determine whether the audio signal comprises the key speech according to the comparison result.

11. The apparatus according to claim 10, wherein the state determining unit (402) comprises:
a state determining subunit, configured to perform the comparison on the sound energies of reference signals of the at least two sound zones, determine that an audio signal collected in a sound zone with the smallest sound energy comprises the key speech, and determine that audio signals collected in sound zones other than the sound zone with the smallest sound energy do not comprise the key speech.

12. The apparatus according to claim 10, wherein the state determining unit (402) comprises:
a probability relative order determining subunit, configured to perform the comparison on the sound energies of the reference signals of the at least two sound zones to obtain the comparison result, and determine a relative order of probabilities of each audio signal comprising the key speech according to the comparison result; and
a state determining subunit, configured to determine that an audio signal collected in a sound zone with the maximum probability comprises the key speech according to the comparison result, and determine that audio signals collected in sound zones other than the sound zone with the maximum probability do not comprise the key speech.

13. A non-transitory computer-readable storage medium storing computer instructions, wherein the computer instructions are configured to cause the computer to execute the method according to any one of claims 1-9

## Patentansprüche

1. Spracherkennungsverfahren, umfassend:
Erhalten (S101) von Audiosignalen, die von Mikrofonen in mindestens zwei Schallzonen erfasst werden;
Bestimmen (S102) gemäß der Schallenergie des Audiosignals, ob jedes Audiosignal eine Hauptsprache umfasst, um ein bestimmtes Ergebnis zu erhalten;
Anpassen (S103) einer Schrittgröße eines adaptiven Filters in jeder Schallzone entsprechend dem bestimmten Ergebnis;
Steuern (S104) des adaptiven Filters, um eine adaptive Filterverarbeitung an dem Audiosignal durchzuführen, das in der dem adaptiven Filter entsprechenden Schallzone erfasst wurde, entsprechend der Schrittgröße, so dass das Audiosignal der Schallzone, in der das Audiosignal die Hauptsprache enthält, verstärkt wird, und das Audiosignal der Schallzone, in der das Audiosignal die Hauptsprache nicht enthält, entsprechend abgeschwächt wird, und Ausgeben eines gefilterten Signals; und
Durchführen (S105) einer Spracherkennung an dem gefilterten Signal;
**dadurch gekennzeichnet, dass** das Bestimmen (S102) gemäß der Schallenergie des Audiosignals, ob jedes Audiosignal die Hauptsprache umfasst, umfasst:
Eingeben (S202) des Audiosignals in eine blockierende Matrix, die der Schallzone entspricht, und Bestimmen der Schallzone als aktuelle Schallzone der blockierenden Matrix;
Bestimmen (S203) mindestens eines Referenzsignals der aktuellen Schallzone für die blockierende Matrix basierend auf einem Audiosignal der aktuellen Schallzone und Audiosignalen von mindestens einer nicht aktuellen Schallzone, wobei das mindestens eine Referenzsignal so konfiguriert ist, dass andere Umgebungsgeräusche als die Hauptsprache in der aktuellen Schallzone verstärkt werden; und
Durchführen (S204) eines Vergleichs der Schallenergien von Referenzsignalen der mindestens zwei Schallzonen, um ein Vergleichsergebnis zu erhalten, und Bestimmen gemäß dem Vergleichsergebnis, ob das Audiosignal die Hauptsprache umfasst.

2. Verfahren nach Anspruch 1, wobei das Durchführen (S204) des Vergleichs der Schallenergien von Referenzsignalen der mindestens zwei Schallzonen, um das Vergleichsergebnis zu erhalten, und Bestimmen gemäß dem Vergleichsergebnis, ob das Audiosignal die Hauptsprache umfasst, umfassen:
Durchführen des Vergleichs der Schallenergien von Referenzsignalen der mindestens zwei Schallzonen, Bestimmen, dass ein in einer Schallzone mit der kleinsten Schallenergie erfasstes Audiosignal die Hauptsprache umfasst, und Bestimmen, dass in anderen Schallzonen als der Schallzone mit der geringsten Schallenergie erfasste Audiosignale die Hauptsprache nicht umfassen.

3. Verfahren nach Anspruch 1, wobei das Durchführen (S204) des Vergleichs der Schallenergien von Referenzsignalen der mindestens zwei Schallzonen, um das Vergleichsergebnis zu erhalten, und Bestimmen gemäß dem Vergleichsergebnis, ob das Audiosignal die Hauptsprache umfasst, umfassen:
Durchführen des Vergleichs der Schallenergien der Referenzsignale der mindestens zwei Schallzonen, um das Vergleichsergebnis zu erhalten, und Bestimmen einer relativen Reihenfolge der Wahrscheinlichkeiten, dass jedes Audiosignal die Hauptsprache umfasst, gemäß dem Vergleichsergebnis; und
Bestimmen, dass ein in einer Schallzone mit der maximalen Wahrscheinlichkeit erfasstes Audiosignal die Hauptsprache umfasst, gemäß dem Vergleichsergebnis, und Bestimmen, dass in anderen Schallzonen als der Schallzone mit der maximalen Wahrscheinlichkeit erfasste Audiosignale die Hauptsprache nicht umfassen.

4. Verfahren nach einem der Ansprüche 1-3, wobei das Anpassen (S103) der Schrittgröße des adaptiven Filters in jeder Schallzone gemäß dem bestimmten Ergebnis umfasst:
Anpassen der Schrittgrößenberechnungsstrategie des adaptiven Filters in der Schallzone, in der das Audiosignal die Hauptsprache umfasst, an eine präzise Schrittgrößenstrategie; und
Anpassen der Schrittgrößenberechnungsstrategie des adaptiven Filters in der Schallzone, in der das Audiosignal die Hauptsprache nicht umfasst, an eine grobe Schrittgrößenstrategie; wobei
eine durch die präzise Schrittgrößenstrategie bestimmte Schrittgröße kleiner als eine durch die grobe Schrittgrößenstrategie bestimmte Schrittgröße ist.

5. Verfahren nach Anspruch 1, wobei das Verfahren vor dem Steuern des adaptiven Filters zum Durchführen einer adaptiven Filterverarbeitung an dem in der dem adaptiven Filter entsprechenden Schallzone erfassten Audiosignal gemäß der Schrittgröße weiter umfasst:
Durchführen einer primären Rauschunterdrückungsverarbeitung an dem Audiosignal der Schallzone durch Anwenden von mindestens zwei Festparameterfiltern entsprechend der Schallzone, um ein gewünschtes Signal zu erzeugen, wobei das gewünschte Signal so konfiguriert ist, dass es die Hauptsprache in der Schallzone verstärkt; und
Steuern des adaptiven Filters, um eine sekundäre Rauschunterdrückungsverarbeitung an dem Audiosignal, das in der dem adaptiven Filter entsprechenden Schallzone erfasst wurde, entsprechend der Schrittgröße durchzuführen, und Ausgeben eines gefilterten Signals umfassen:
Eingeben des gewünschten Signals und des Referenzsignals der Schallzone in den adaptiven Filter, der der Schallzone entspricht; und
Steuern des adaptiven Filters, um die sekundäre Rauschunterdrückungsverarbeitung an dem gewünschten Signal und dem Referenzsignal durchzuführen, indem die Schrittgröße übernommen wird, und Ausgeben des gefilterten Signals.

6. Verfahren nach Anspruch 5, wobei der adaptive Filter ein adaptiver Strahlformungsfilter ist und die Festparameterfilter Strahlformungsfilter mit festen Parametern sind, und
Anfangsparameter der Strahlformungsfilter und blockierenden Matrizen mit festen Parametern entsprechend den Zeitverzögerungen der Schallübertragung zwischen den Mikrofonen in den mindestens zwei Schallzonen bestimmt werden.

7. Verfahren nach Anspruch 1, wobei das Verfahren nach Durchführen (S105) der Spracherkennung an dem gefilterten Signal weiter umfasst:
Bestimmen einer Schallzone, in der das Audiosignal die Hauptsprache umfasst, als Zielschallzone; und
Aufwecken einer Spracherkennungsmaschine zum Erkennen nachfolgender Audiosignale der Zielschallzone, wenn ein Spracherkennungsergebnis der Zielschallzone ein Weckwort umfasst.

8. Verfahren nach Anspruch 1, wobei das Verfahren nach Durchführen (S105) der Spracherkennung an dem gefilterten Signal weiter umfasst:
Reagieren auf ein Spracherkennungsergebnis des gefilterten Signals entsprechend dem Spracherkennungsergebnis in Kombination mit einer Einstellfunktion der Schallzone.

9. Verfahren nach Anspruch 8, wobei die mindestens zwei Schallzonen eine Fahrer-Schallzone und mindestens eine Nicht-Fahrer-Schallzone umfassen.

10. Spracherkennungseinrichtung, umfassend:
ein Audiosignal-Erfassungsmodul (401), das so konfiguriert ist, dass es von Mikrofonen in mindestens zwei Schallzonen erfasste Audiosignale erhält;
ein Zustandsbestimmungsmodul (402), das so konfiguriert ist, dass es anhand der Schallenergie des Audiosignals bestimmt, ob jedes Audiosignal eine Hauptsprache umfasst, um ein bestimmtes Ergebnis zu erhalten;
ein Parameteranpassungsmodul (403), das so konfiguriert ist, dass es eine Schrittgröße eines adaptiven Filters in jeder Schallzone entsprechend dem bestimmten Ergebnis anpasst;
ein Filterverarbeitungsmodul (404), das so konfiguriert ist, dass es den adaptiven Filter steuert, um eine adaptive Filterverarbeitung des in der dem adaptiven Filter entsprechenden Schallzone erfassten Audiosignals gemäß der Schrittgröße durchzuführen, um eine Verbesserung des Audiosignals, das die Hauptsprache enthält, und Abschwächung des Audiosignals, das die Hauptsprache nicht enthält, zu realisieren, und ein gefiltertes Signal auszugeben; und
ein Spracherkennungsmodul (405), das so konfiguriert ist, dass es eine Spracherkennung an dem gefilterten Signal durchführt;
**dadurch gekennzeichnet, dass** das Zustandsbestimmungsmodul (402) umfasst:
eine Audiosignal-Eingabeeinheit, die so konfiguriert ist, dass sie das Audiosignal in eine blockierende Matrix eingibt, die der Schallzone entspricht, und die Schallzone als aktuelle Schallzone der blockierenden Matrix bestimmt;
eine Referenzsignal-Bestimmungseinheit, die so konfiguriert ist, dass sie für die blockierende Matrix mindestens ein Referenzsignal der aktuellen Schallzone basierend auf einem Audiosignal der aktuellen Schallzone und Audiosignalen mindestens einer nicht aktuellen Schallzone bestimmt, wobei das mindestens eine Referenzsignal so konfiguriert ist, dass andere Umgebungsgeräusche als die Hauptsprache in der aktuellen Schallzone verstärkt werden; und
eine Zustandsbestimmungseinheit, die so konfiguriert ist, dass sie einen Vergleich der Schallenergien von Referenzsignalen der mindestens zwei Schallzonen durchführt, um ein Vergleichsergebnis zu erhalten, und gemäß dem Vergleichsergebnis bestimmt, ob das Audiosignal die Hauptsprache umfasst.

11. Einrichtung nach Anspruch 10, wobei die Zustandsbestimmungseinheit (402) umfasst:
eine Zustandsbestimmungsuntereinheit, die dazu konfiguriert ist, den Vergleich der Schallenergien von Referenzsignalen der mindestens zwei Schallzonen durchzuführen, zu bestimmen, dass ein in einer Schallzone mit der kleinsten Schallenergie erfasstes Audiosignal die Hauptsprache umfasst, und zu bestimmen, dass Audiosignale, die in anderen Schallzonen als der Schallzone mit der geringsten Schallenergie erfasst werden, die Hauptsprache nicht umfassen.

12. Einrichtung nach Anspruch 10, wobei die Zustandsbestimmungseinheit (402) umfasst:
eine Untereinheit zum Bestimmen der relativen Wahrscheinlichkeitsreihenfolge, die so konfiguriert ist, dass sie den Vergleich der Schallenergien der Referenzsignale der mindestens zwei Schallzonen durchführt, um das Vergleichsergebnis zu erhalten, und eine relative Reihenfolge der Wahrscheinlichkeiten jedes Audiosignals, das die Hauptsprache umfasst, gemäß dem Vergleichsergebnis bestimmt; und
eine Zustandsbestimmungsuntereinheit, die so konfiguriert ist, dass sie gemäß dem Vergleichsergebnis bestimmt, dass ein Audiosignal, das in einer Schallzone mit der maximalen Wahrscheinlichkeit erfasst wird, die Hauptsprache umfasst, und bestimmt, dass Audiosignale, die in anderen Schallzonen als der Schallzone mit der maximalen Wahrscheinlichkeit gesammelt werden, die Hauptsprache nicht umfassen.

13. Nichtflüchtiges computerlesbares Speichermedium, auf dem Computeranweisungen gespeichert sind, wobei die Computeranweisungen so konfiguriert sind, dass sie den Computer veranlassen, das Verfahren nach einem der Ansprüche 1-9 auszuführen.

## Revendications

1. Procédé de reconnaissance vocale, comprenant :
l'obtention (S101) de signaux audio collectés par des microphones dans au moins deux zones sonores ;
la détermination (S102) pour établir si chaque signal audio comprend une parole clé selon l'énergie sonore du signal audio pour acquérir un résultat déterminé ;
l'ajustement (S103) d'une taille de pas d'un filtre adaptatif dans chaque zone sonore selon le résultat déterminé ;
la commande (S104) de la réalisation par le filtre adaptatif d'un traitement de filtrage adaptatif sur le signal audio collecté dans la zone sonore correspondant au filtre adaptatif selon la taille de pas, de sorte que le signal audio de la zone sonore où le signal audio inclut la parole clé soit amélioré, et le signal audio de la zone sonore où le signal audio n'inclut pas la parole clé soit affaibli en conséquence, et la sortie d'un signal filtré ; et
la réalisation (S105) d'une reconnaissance vocale sur le signal filtré ;
**caractérisé en ce que** la détermination (S102) pour établir si chaque signal audio comprend la parole clé selon l'énergie sonore du signal audio comprend :
l'entrée (S202) du signal audio dans une matrice de blocage correspondant à la zone sonore, et la détermination de la zone sonore en tant que zone sonore actuelle de la matrice de blocage ;
la détermination (S203), pour la matrice de blocage, d'au moins un signal de référence de la zone sonore actuelle sur la base d'un signal audio de la zone sonore actuelle et de signaux audio d'au moins une zone sonore non actuelle, dans lequel le au moins un signal de référence est configuré pour renforcer des bruits environnementaux autres que la parole clé dans la zone sonore actuelle ; et
la réalisation (S204) d'une comparaison sur des énergies sonores de signaux de référence des au moins deux zones sonores pour obtenir un résultat de comparaison, et la détermination pour établir si le signal audio comprend la parole clé selon le résultat de comparaison.

2. Procédé selon la revendication 1, dans lequel la réalisation (S204) de la comparaison sur les énergies sonores de signaux de référence des au moins deux zones sonores pour obtenir le résultat de comparaison, et la détermination pour établir si le signal audio comprend la parole clé selon le résultat de comparaison comprennent :
la réalisation de la comparaison sur les énergies sonores de signaux de référence des au moins deux zones sonores, la détermination qu'un signal audio collecté dans une zone sonore avec la plus petite énergie sonore comprend la parole clé, et la détermination que des signaux audio collectés dans des zones sonores autres que la zone sonore avec la plus petite énergie sonore ne comprennent pas la parole clé.

3. Procédé selon la revendication 1, dans lequel la réalisation (S204) de la comparaison sur les énergies sonores de signaux de référence des au moins deux zones sonores pour obtenir le résultat de comparaison, et la détermination pour établir si le signal audio comprend la parole clé selon le résultat de comparaison comprennent :
la réalisation de la comparaison sur les énergies sonores des signaux de référence des au moins deux zones sonores pour obtenir le résultat de comparaison, et la détermination d'un ordre relatif de probabilités de chaque signal audio comprenant la parole clé selon le résultat de comparaison ; et
la détermination qu'un signal audio collecté dans une zone sonore avec la probabilité maximale comprend la parole clé selon le résultat de comparaison, et la détermination que des signaux audio collectés dans des zones sonores autres que la zone sonore avec la probabilité maximale ne comprennent pas la parole clé.

4. Procédé selon l'une quelconque des revendications 1-3, dans lequel l'ajustement (S103) de la taille de pas du filtre adaptatif dans chaque zone sonore selon le résultat déterminé comprend :
l'ajustement d'une stratégie de calcul de taille de pas du filtre adaptatif dans la zone sonore où le signal audio comprend la parole clé en une stratégie de taille de pas précise ; et
l'ajustement de la stratégie de calcul de taille de pas du filtre adaptatif dans la zone sonore où le signal audio ne comprend pas la parole clé en une stratégie de taille de pas approximative ; dans lequel
une taille de pas déterminée par la stratégie de taille de pas précise est inférieure à une taille de pas déterminée par la stratégie de taille de pas approximative.

5. Procédé selon la revendication 1, dans lequel avant la commande de la réalisation par le filtre adaptatif d'un traitement de filtrage adaptatif sur le signal audio collecté dans la zone sonore correspondant au filtre adaptatif selon la taille de pas, le procédé comprend en outre :
la réalisation d'un traitement de réduction de bruit primaire sur le signal audio de la zone sonore en adoptant au moins deux filtres à paramètres fixes correspondant à la zone sonore, de manière à générer un signal souhaité, dans lequel le signal souhaité est configuré pour renforcer la parole clé dans la zone sonore ; et
la commande de la réalisation par le filtre adaptatif d'un traitement de réduction de bruit secondaire sur le signal audio collecté dans la zone sonore correspondant au filtre adaptatif selon la taille de pas, et la sortie d'un signal filtré comprennent :
l'entrée du signal souhaité et du signal de référence de la zone sonore dans le filtre adaptatif correspondant à la zone sonore ; et
la commande de la réalisation par le filtre adaptatif du traitement de réduction de bruit secondaire sur le signal souhaité et le signal de référence en adoptant la taille de pas, et la sortie du signal filtré.

6. Procédé selon la revendication 5, dans lequel le filtre adaptatif est un filtre de formation de faisceau adaptatif, et les filtres à paramètres fixes sont des filtres de formation de faisceau à paramètres fixes, et
les paramètres initiaux des filtres de formation de faisceau à paramètres fixes et des matrices de blocage sont déterminés selon des retards de transmission du son entre les microphones dans les au moins deux zones sonores.

7. Procédé selon la revendication 1, dans lequel après réalisation (S105) de la reconnaissance vocale sur le signal filtré, le procédé comprend en outre :
la détermination d'une zone sonore où le signal audio comprend la parole clé en tant que zone sonore cible ; et
le réveil d'un moteur de reconnaissance vocale pour la reconnaissance de signaux audio ultérieurs de la zone sonore cible lorsqu'un résultat de reconnaissance vocale de la zone sonore cible comprend un mot de réveil.

8. Procédé selon la revendication 1, dans lequel après réalisation (S105) de la reconnaissance vocale sur le signal filtré, le procédé comprend en outre :
la réponse à un résultat de reconnaissance vocale du signal filtré selon le résultat de reconnaissance vocale en combinaison avec une fonction de réglage de la zone sonore.

9. Procédé selon la revendication 8, dans lequel les au moins deux zones sonores comprennent une zone sonore conducteur et au moins une zone sonore non-conducteur.

10. Appareil de reconnaissance vocale, comprenant :
un module d'obtention de signaux audio (401), configuré pour obtenir des signaux audio collectés par des microphones dans au moins deux zones sonores ;
un module de détermination d'état (402), configuré pour déterminer si chaque signal audio comprend une parole clé selon l'énergie sonore du signal audio pour acquérir un résultat déterminé ;
un module d'ajustement de paramètres (403), configuré pour ajuster une taille de pas d'un filtre adaptatif dans chaque zone sonore selon le résultat déterminé ;
un module de traitement par filtre (404), configuré pour commander la réalisation par le filtre adaptatif d'un traitement de filtrage adaptatif sur le signal audio collecté dans la zone sonore correspondant au filtre adaptatif selon la taille de pas pour réaliser une amélioration du signal audio incluant la parole clé et un affaiblissement du signal audio n'incluant pas la parole clé, et produire en sortie un signal filtré ; et
un module de reconnaissance vocale (405), configuré pour réaliser une reconnaissance vocale sur le signal filtré ;
**caractérisé en ce que** le module de détermination d'état (402) comprend :
une unité d'entrée de signal audio, configurée pour entrer le signal audio dans une matrice de blocage correspondant à la zone sonore, et déterminer la zone sonore en tant que zone sonore actuelle de la matrice de blocage ;
une unité de détermination de signal de référence, configurée pour déterminer, pour la matrice de blocage, au moins un signal de référence de la zone sonore actuelle sur la base d'un signal audio de la zone sonore actuelle et de signaux audio d'au moins une zone sonore non actuelle, dans lequel le au moins un signal de référence est configuré pour renforcer des bruits environnementaux autres que la parole clé dans la zone sonore actuelle ; et
une unité de détermination d'état, configurée pour réaliser une comparaison sur des énergies sonores de signaux de référence des au moins deux zones sonores pour obtenir un résultat de comparaison, et déterminer si le signal audio comprend la parole clé selon le résultat de comparaison.

11. Appareil selon la revendication 10, dans lequel l'unité de détermination d'état (402) comprend :
une sous-unité de détermination d'état, configurée pour réaliser la comparaison sur les énergies sonores de signaux de référence des au moins deux zones sonores, déterminer qu'un signal audio collecté dans une zone sonore avec la plus petite énergie sonore comprend la parole clé, et déterminer que des signaux audio collectés dans des zones sonores autres que la zone sonore avec la plus petite énergie sonore ne comprennent pas la parole clé.

12. Appareil selon la revendication 10, dans lequel l'unité de détermination d'état (402) comprend :
une sous-unité de détermination d'ordre relatif de probabilité, configurée pour réaliser la comparaison sur les énergies sonores des signaux de référence des au moins deux zones sonores pour obtenir le résultat de comparaison, et déterminer un ordre relatif de probabilités de chaque signal audio comprenant le parole clé selon le résultat de comparaison ; et
une sous-unité de détermination d'état, configurée pour déterminer qu'un signal audio collecté dans une zone sonore avec la probabilité maximale comprend la parole clé selon le résultat de comparaison, et déterminer que des signaux audio collectés dans des zones sonores autres que la zone sonore avec la probabilité maximale ne comprennent pas la parole clé.

13. Support de stockage non transitoire lisible par ordinateur stockant des instructions informatiques, dans lequel les instructions informatiques sont configurées pour amener l'ordinateur à exécuter le procédé selon l'une quelconque des revendications 1-9.
